# FASCICULE DE BREVET EUROPEEN

(11) **EP 4 363 697 B1**
(45) Date de publication et mention de la délivrance du brevet: **06.08.2025**
(21) Numéro de dépôt: 22744271.2
(22) Date de dépôt: 23.06.2022
(51) Int. Cl.: F01D 5/18

(54) **AUBE DE TURBOMACHINE EQUIPEE D'UN CIRCUIT DE REFROIDISSEMENT ET PROCEDE DE FABRICATION A CIRE PERDUE D'UNE TELLE AUBE**
TURBOMASCHINENSCHAUFEL MIT EINEM KÜHLKREISLAUF UND VERFAHREN ZUR HERSTELLUNG EINER SOLCHEN SCHAUFEL AUS VERLORENEM WACHS
TURBOMACHINE VANE PROVIDED WITH A COOLING CIRCUIT AND METHOD FOR LOST-WAX MANUFACTURING OF SUCH A VANE

(30) Priorité: 02.07.2021 FR 2107176
(43) Date de publication de la demande: 08.05.2024
(73) Titulaire: SAFRAN, 75015 Paris (FR)
(72) Inventeur: PAQUIN, Sylvain, 77550 MOISSY-CRAMAYEL (FR); ROLLINGER, Adrien Bernard Vincent, 77550 MOISSY-CRAMAYEL (FR); CARIOU, Romain Pierre, 77550 MOISSY-CRAMAYEL (FR); PAGNONI, Filippo, 77550 MOISSY-CRAMAYEL (FR)
(74) Mandataire: Gevers & Orès
(86) Numéro de dépôt international: PCT/FR2022/051227
(87) Numéro de publication internationale: WO 2023/275459

(56) Documents cités:
- CN-A- 101 007 337
- FR-A1- 3 065 985
- US-A1- 2019 112 942
- US-A1- 2019 316 472

## Description

### Domaine de l'invention

La présente invention concerne le domaine des turbomachines et en particulier une aube de turbomachine équipée d'un circuit de refroidissement destiné à la refroidir. Elle vise également un procédé de fabrication à cire perdue d'une telle aube.

### Arrière-plan technique

L'arrière-plan technique comprend notamment les documents US-A1-2019/316472, US-A1-2019/112942 et CN-A-101 007 337.

Les aubes de turbomachine, notamment les aubes de turbine haute pression sont soumises à des températures très élevées qui peuvent réduire leur durée de vie et dégrader les performances de la turbomachine. En effet, les turbines de turbomachine sont agencées en aval de la chambre de combustion de la turbomachine qui éjecte un flux gazeux chaud lequel est détendu par les turbines et permet de les entraîner en rotation pour le fonctionnement de la turbomachine. La turbine haute pression qui est placée directement à la sortie de la chambre de combustion subit les températures les plus élevées.

Afin de permettre aux aubes de turbine de supporter ces contraintes thermiques sévères, il est connu de prévoir un circuit de refroidissement dans lequel circule un air relativement plus froid qui est prélevé au niveau des compresseurs, ces derniers étant situés en amont de la chambre de combustion. Plus précisément, chaque aube de turbine comprend une pale avec une paroi intrados et une paroi extrados qui sont reliées en amont par un bord d'attaque et en aval par un bord de fuite.

Le circuit de refroidissement comprend en général plusieurs cavités à l'intérieur de la pale de l'aube dont certaines communiquent entre elles et qui sont alimentées par de l'air de refroidissement depuis le pied de l'aube, une partie de cet air de refroidissement débouchant dans des orifices de sortie qui sont placés au voisinage du bord de fuite. Ces orifices délivrent des jets d'air de refroidissement sur les parois de la pale.

Il est connu que le circuit de refroidissement comprenne plusieurs cloisons s'étendant radialement dans la pale de manière à former des cavités « montantes » et « descendantes » disposées successivement suivant le sens de circulation de l'air de refroidissement et qui communiquent entre elles par des passages courbes. Ces cavités et passages sont connus sous l'expression de circuit « trombone ».

Les cavités du circuit de refroidissement sont réalisées généralement par au moins un noyau de fonderie qui est exploité dans un procédé de fabrication de l'aube utilisant la technique de fonderie à cire perdue.

Les cavités du circuit de refroidissement sont souvent munies de promoteurs de turbulence afin d'augmenter les échanges thermiques. Un promoteur de turbulence est un élément en saillie dans la cavité qui a pour fonction de générer des perturbations et turbulences dans le flux d'air qui circule dans la cavité, afin d'augmenter les échanges thermiques entre ce flux d'air et les parois de la cavité (voir par exemple le document FR-A1-3 065 985).

Les promoteurs de turbulence usuels sont de différents types mais historiquement contraints par la capacité de démoulage nécessaires aux noyaux utilisés pour la formation des cavités et des promoteurs de turbulence.

Parmi les formes courantes, on trouvera les perturbateurs simples, droits ou inclinés, en chevrons, les simples protubérances ou creux de forme cylindrique ou en goutte d'eau ou bien encore les pontets qui traversent les cavités et relient deux parois opposés (intrados et extrados typiquement).

Ces perturbateurs, suivant leur type, leur espacement et leurs dimensions géométriques ont des efficacités thermiques différentes mais cette efficacité reste proportionnelle aux pertes de charge engendrées : dans un diagramme perte de charge / efficacité thermique, toutes ces géométries sont essentiellement alignées. Or, le taux de surpression disponible pour faire circuler l'air dans le circuit étant limité, il y a un fort intérêt à augmenter le ratio échange thermique / perte de charge.

Les échanges thermiques obtenus sont par ailleurs peu homogènes.

Il est, de plus, difficile d'augmenter les échanges thermiques sur une face (typiquement une paroi chaude), tout en limitant les échanges thermiques sur la face opposée (typiquement une cloison interne froide), car ces échanges augmentent inutilement les pertes de charge et augmentent le gradient de température entre la cloison interne froide et la paroi externe chaude, ce qui est néfaste pour la tenue mécanique de l'aube.

Il existe donc un besoin de définir une technologie qui apporte une solution à au moins une partie de ces problèmes.

### Résumé de l'invention

L'objectif de la présente invention est d'améliorer le ratio échange thermique sur les parois chaudes / pertes de charge dans la cavité, par l'utilisation d'une nouvelle configuration des promoteurs de turbulence.

Nous parvenons à cet objectif conformément à l'invention grâce à une aube de turbomachine d'aéronef, cette aube comprenant une pale et un circuit de refroidissement à l'intérieur de la pale, ce circuit de refroidissement comportant au moins une cavité longitudinale d'écoulement d'un flux d'air de refroidissement, le circuit de refroidissement comportant en outre des éléments qui sont en saillie dans ladite cavité et qui sont configurés pour perturber ledit flux d'air, caractérisée en ce que chacun desdits éléments en saillie a une forme générale d'arche et comporte deux jambes latérales et un toit médian, les jambes s'étendant entre une première paroi de la cavité et ledit toit, ce toit reliant entre elles lesdites jambes, et en ce que chacun desdits éléments définit intérieurement, avec ladite première paroi, une première section de passage, et extérieurement, avec une seconde paroi opposée à la première paroi, une seconde section de passage, et chacun desdits éléments étant configuré pour que ladite première ou seconde section de passage soit réduite d'amont en aval par rapport à la direction dudit flux d'air.

La présente invention propose ainsi d'utiliser des éléments en saillie en forme d'arche. Ces éléments en saillie ont la particularité de permettre une réduction de la section de passage d'air à l'intérieur ou à l'extérieur d'eux, de façon à accélérer l'air qui traverse cette section de passage. L'augmentation de la vitesse d'écoulement de l'air sur la paroi à laquelle est reliée un élément en saillie, ou sur la paroi opposée, permet d'augmenter les échanges thermiques entre l'air et cette paroi et donc d'optimiser le refroidissement de l'aube.

Le principe de l'invention est donc d'augmenter les échanges thermiques en jouant sur la vitesse d'écoulement de l'air plutôt que sur les turbulences. En effet, les turbulences augmentent les pertes de charge en même temps que les échanges thermiques alors que l'accélération augmente les échanges thermiques tout en affinant la couche limite donc en réduisant les pertes de charge. De plus, l'établissement de la turbulence nécessite la mise en place de plusieurs promoteurs avant d'atteindre un niveau optimal pour l'augmentation des échanges thermiques et ne peut, de ce fait être utilisé pour un refroidissement très local.

L'aube comprend également l'une ou plusieurs des caractéristiques suivantes, prises seules ou en combinaison :
- le toit comportant une première face qui est en regard de la première paroi, et une seconde face qui est en regard de la seconde paroi, au moins l'une des première et seconde faces étant inclinée par rapport à la paroi en regard, d'amont en aval par rapport à la direction dudit flux d'air, de façon à réduire la section de passage correspondante ;
- ledit toit de chacun desdits éléments en saillie est incliné par rapport auxdites première et seconde parois
- lesdites première et seconde faces sont sensiblement parallèles entre elles ;
- lesdits éléments en saillie sont disposés les uns derrière les autres à l'intérieur de ladite cavité et forment une rangée d'éléments en saillie s'étendant le long de ladite direction dudit flux d'air, la rangée comportant par exemple entre 5 et 10 éléments en saillie ;
- lesdites jambes de chacun desdits éléments en saillie sont séparées l'une de l'autre d'une distance représentant plus de 40% d'une largeur de ladite cavité ;
- lesdites jambes de chacun desdits éléments en saillie sont orientées de manière convergente d'amont en aval ;
- lesdites jambes et ledit toit de chacun desdites éléments en saillie comportent des bords amont qui sont arrondis convexes ;
- ledit toit de chacun desdites éléments en saillie est situé sensiblement à une demi hauteur dans ladite cavité, cette hauteur étant mesurée entre lesdites première et seconde parois ;
- chacun desdites éléments en saillie définit une section interne de passage d'air qui a une forme générale rectangulaire, circulaire, oblongue ou trapézoïdale ;
- la réduction de la section de passage depuis l'entrée jusqu'à la sortie de chacun des éléments en saillie, est de l'ordre d'au moins 10% ;
- la section de passage à l'intérieur et à l'entrée de chacun des éléments en saillie peut représenter au moins 25% de la section de passage totale de la cavité ;
- chacun des éléments en saillie a une longueur notée L3 et a une entrée présentant une hauteur notée h, la longueur L3 étant comprise entre 0,5.h et 3.h.

La présente invention concerne également un procédé de fabrication à cire perdue d'une aube telle que décrite ci-dessus, caractérisé en ce qu'il comprend les étapes suivantes :
- fournir un noyau céramique ou métallique réfractaire pour la formation de ladite cavité, ce noyau ayant une forme allongée et comportant des conduits internes en U qui sont configurés pour former par moulage lesdits éléments en saillie, chacun de ces conduits comportant chacun deux extrémités qui débouchent sur une même face du noyau configuré pour former par moulage ladite première paroi,
- injection de cire de manière à enrober le noyau et à former un modèle,
- fabrication d'une carapace enveloppant le modèle,
- versement d'un métal en fusion à l'intérieur de la carapace de manière à former l'aube, et
- décochage de la carapace et du noyau de manière à libérer l'aube et à former le circuit de refroidissement avec sa cavité et ses éléments en saillie.

L'invention concerne en outre une turbine de turbomachine comprenant au moins une aube de turbomachine présentant les caractéristiques susmentionnées.

L'invention concerne par ailleurs une turbomachine comprenant au moins une turbine de turbomachine telle que précitée.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
[Fig. 1] La figure 1 est une vue schématique en coupe axiale et partielle d'un exemple de turbomachine à laquelle s'applique l'invention ;
[Fig. 2] La figure 2 est une vue schématique une coupe axiale d'une aube de turbomachine avec un circuit de refroidissement selon l'invention ;
[Fig. 3] La figure 3 est une vue schématique en coupe transversale d'une pale d'une aube de turbomachine comprenant un circuit de refroidissement avec diverses cavités ;
[Fig. 4] La figure 4 est une vue en perspective d'éléments en saillie qui sont situés dans une cavité d'un circuit de refroidissement d'une aube selon l'invention ;
[Fig. 5A-5B] Les figures 5A et 5B sont respectivement des vues schématiques d'un élément en saillie, vu de haut dans une cavité, et vu en coupe selon la ligne B-B de la figure 5A ; [Fig. 5C-5D] Les figures 5C et 5D sont respectivement des vues schématiques de l'élément en saillie, vu en coupe selon la ligne C-C de la figure 5A, vu en coupe selon la ligne D-D de la figure 5A ;
[Fig. 6A-6B] La figure 6A est une vue schématique en coupe d'une cavité d'un circuit de refroidissement d'une aube selon l'invention, le plan de coupe passant par des jambes des éléments en saillie situés dans cette cavité, et la figure 6B étant une vue à plus grande échelle d'un détail de la figure 6A ;
[Fig. 7A-7B] La figure 7A est une vue schématique en coupe d'une cavité d'un circuit de refroidissement d'une aube selon l'invention, le plan de coupe passant par des toits des éléments en saillie situés dans cette cavité, et la figure 7B étant une vue à plus grande échelle d'un détail de la figure 7A ;
[Fig. 8] La figure 8 est une vue schématique d'un noyau céramique pour le moulage de la cavité d'une aube selon l'invention ; et
[Fig. 9] La figure 9 est une vue schématique en coupe selon la ligne IX-IX de la figure 8.

### Description détaillée de l'invention

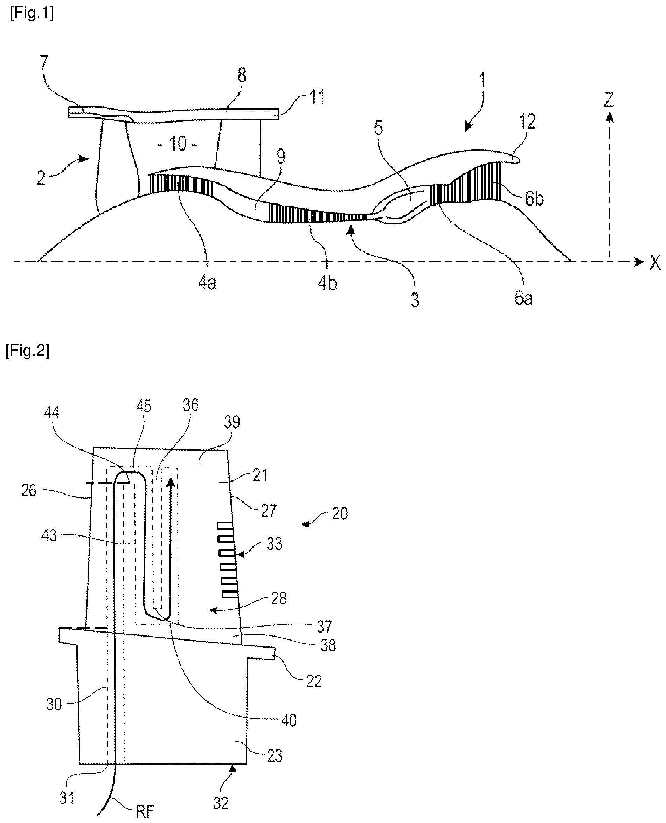

La figure 1 montre une vue en coupe axiale et partielle d'une turbomachine 1 d'axe longitudinal X à laquelle s'applique l'invention. La turbomachine représentée est une turbomachine double flux et double corps destiné à être montée sur un aéronef selon l'invention. Bien entendu, l'invention n'est pas limitée à ce type de turbomachine.

Cette turbomachine 1 à double flux comprend, de manière générale, une soufflante 2 montée en amont d'un générateur de gaz 3. Dans la présente invention, et de manière générale, les termes « amont » et « aval » sont définis par rapport à la circulation des gaz dans la turbomachine et ici suivant l'axe longitudinal X (et même de gauche à droite sur la figure 1). Les termes « axial » et « axialement » sont définis par rapport à l'axe longitudinal X. De même, les termes « radial », « interne » et « externe » sont définis par rapport à un axe radial Z perpendiculaire à l'axe longitudinal X et au regard de l'éloignement par rapport à l'axe longitudinal X.

Le générateur de gaz 3 comprend d'amont en aval, un compresseur basse pression 4a, un compresseur haute pression 4b, une chambre de combustion 5, une turbine haute pression 6a et une turbine basse pression 6b.

La soufflante 2, qui est entourée par un carter de soufflante 7 portée par une nacelle 8, divise l'air qui entre dans la turbomachine en un flux d'air primaire qui traverse le générateur de gaz 3 et en particulier dans une veine primaire 9, et en un flux d'air secondaire qui circule autour du générateur de gaz dans une veine secondaire 10.

Le flux d'air secondaire est éjecté par une tuyère secondaire 11 terminant la nacelle alors que le flux d'air primaire est éjecté à l'extérieur de la turbomachine via une tuyère d'éjection 12 située en aval du générateur de gaz 3.

La turbine haute pression 6a, comme la turbine basse pression 6b, comprend un ou plusieurs étages. Chaque étage comprend un aubage stator monté en amont d'un aubage mobile. L'aubage stator comprend une pluralité d'aubes de stator ou fixes, appelées distributeur, qui sont réparties circonférentiellement autour de l'axe longitudinal X. L'aubage mobile comprend une pluralité d'aubes mobiles qui sont réparties également circonférentiellement autour d'un disque centré sur l'axe longitudinal X. Les distributeurs dévient et accélèrent le flux aérodynamique en sortie de la chambre de combustion vers les aubes mobiles pour que celles-ci soient entrainées en rotation.

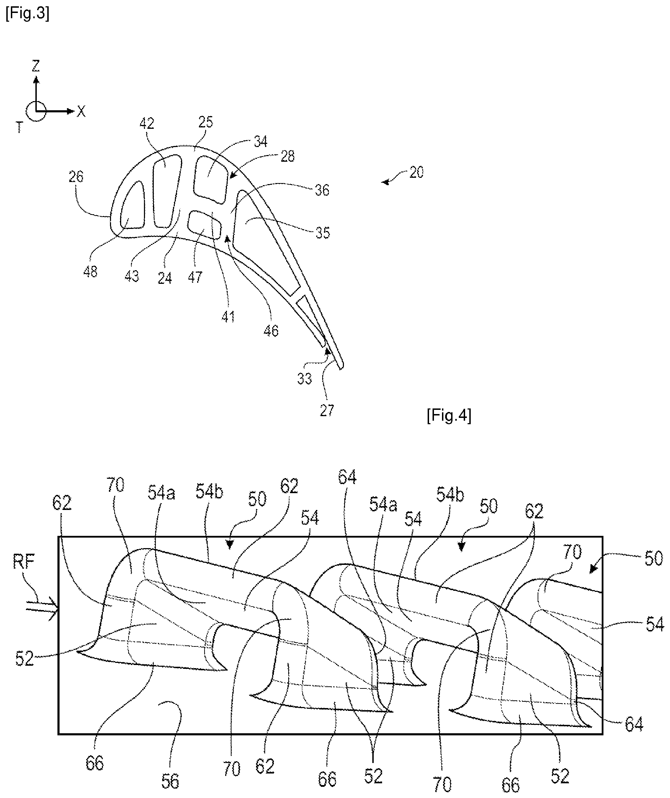

En référence aux figures 2 et 3, chaque aube de turbine (et ici une aube mobile 20 de turbine haute pression) comprend une pale 21 s'élevant radialement depuis une plateforme 22. Cette dernière est portée par un pied 23 qui est destiné à s'implanter dans une des rainures correspondantes du disque de turbine. Chaque pale 21 comprend une paroi intrados 24 et une paroi extrados 25 qui sont reliées en amont par un bord d'attaque 26 et en aval par un bord de fuite 27. Les parois intrados 24 et extrados 25 sont opposées suivant un axe transversal T qui est perpendiculaire aux axes longitudinal X et radial Z.

Les besoins accrus en performances et l'évolution des réglementations aéronautiques poussent les motoristes actuels à concevoir des moteurs fonctionnant dans des environnements (température, pression, vitesse de rotation, émission, etc.) toujours plus sévères. Ceci induit la nécessité de définir des aubes de turbine haute pression « nouvelle génération » pouvant résister à ce type de sollicitations.

Augmenter la température du gaz entrainant l'aube permet d'améliorer le rendement de la turbomachine. Cette température dépasse de plus en plus nettement et de plusieurs centaines de degrés la température de fusion du superalliage constituant l'aube. L'aube doit donc être refroidie de plus en plus efficacement.

Pour cela, l'aube 20 comprend un circuit de refroidissement 28 qui est agencé à l'intérieur de la pale 21 et qui est destiné à refroidir les parois de la pale subissant les températures élevées du flux d'air primaire quittant la chambre de combustion 5 et la traversant. Ce circuit de refroidissement 28 comprend plusieurs cavités qui communiquent entre elles de manière à former un conduit de type « « trombone ». Ce dernier comprend plusieurs passages ou retournements pour qu'un fluide de refroidissement, ici de l'air de refroidissement, balaie l'ensemble de la pale et de haut en bas suivant l'axe radial.

Le pied 23 comprend un canal d'alimentation 30 qui comprend une entrée d'air de refroidissement 31 prélevé en amont de la chambre de combustion 5 tel que sur le compresseur basse pression 4a, et qui débouche dans le conduit de type trombone. Le canal 30 débouche également sur une face radialement interne 32 du pied de l'aube qui comprend l'entrée d'air de refroidissement 31. Le circuit de refroidissement 28 comprend également des orifices de sortie 33 qui sont agencés au voisinage du bord de fuite 27 de la pale. Les orifices de sortie 33 sont orientés sensiblement suivant l'axe longitudinal X et sont alignés et répartis régulièrement sensiblement suivant l'axe radial. De la sorte, l'air de refroidissement RF qui circule depuis le pied de l'aube, traverse les cavités à l'intérieur de la pale et débouche dans les orifices de sortie 33.

Comme cela est illustré en détail sur la figure 3, le circuit de refroidissement 28 comprend plusieurs cavités agencées successivement de l'amont vers l'aval de la pale 21. En particulier, une première cavité 34 et une deuxième cavité 35 s'étendent chacune suivant l'axe radial dans la pale. La deuxième cavité 35 est disposée en aval de la première cavité 34 suivant le sens de circulation de l'air de refroidissement (et de l'amont vers l'aval suivant l'axe longitudinal X). La première cavité 34 et la deuxième cavité 35 sont séparées, au moins en partie, par une première cloison radiale 36 qui a une extrémité libre radialement interne 37. Cette dernière est située au niveau de l'extrémité de raccordement 38 de pied de l'aube (opposée radialement à l'extrémité libre 39 de la pale). L'extrémité libre 39 de la pale comprend par ailleurs, une paroi de fermeture (non représentée) qui permet de contenir l'air de refroidissement à l'intérieur de la pale pour son refroidissement. La première cloison 36 est raccordée à la paroi de fermeture à son extrémité radialement externe (opposée à son extrémité libre radialement interne 37).

Le circuit de refroidissement 28 comprend également une troisième cavité 42 qui s'étend radialement à l'intérieur de la pale. La troisième cavité 42 est disposée en amont de la première cavité 34 dans le sens de circulation de l'air de refroidissement RF. La troisième cavité 42 est séparée au moins en partie de la première cavité 34 par une deuxième cloison radiale 43 qui comprend une extrémité libre radialement externe 44. La troisième cavité 42 et la première cavité 34 sont reliées par un deuxième passage 45 de fluide de refroidissement qui est délimité au moins en partie par l'extrémité libre radialement externe 44. La paroi de fermeture délimite également le deuxième passage 45.

Les 34, 35 et 42 disposées successivement suivant le sens de circulation de fluide de refroidissement forment le conduit de type trombone.

La pale 21 peut comprendre un autre circuit de refroidissement 46 qui permet de refroidir également la pale. Le circuit de refroidissement 46 comprend une cavité intrados 47 qui s'étend radialement à l'intérieur de l'aube. La cavité intrados 47 sert à refroidir spécifiquement la paroi intrados et la partie supérieure de la pale suivant l'axe radial. L'air qui est injecté dans cette cavité peut sortir de la pale par les orifices de sortie 33 ou par d'autres orifices qui serait situés sur la paroi intrados par exemple. Comme nous pouvons le voir sur la figure 3, la cavité intrados 47 s'étend transversalement entre la paroi interne 41 et la paroi intrados 24. Celle-ci s'étend également longitudinalement suivant le sens de circulation du flux d'air entre les cavités 35, 42. En d'autres termes, la cavité 35 couvre transversalement les cavités 34 et 47. Sa longueur est sensiblement identique à celle de la première cavité 34 dans le sens de circulation de l'air de refroidissement (sens axial).

En amont de la troisième cavité 42 est agencée une cavité amont 48 d'un autre circuit de refroidissement de la pale 21, cette cavité 48 s'étendant radialement le long du bord d'attaque 26.

Il ressort de ce qui précède qu'une aube de turbomachine peut comprendre un ou plusieurs circuits internes de refroidissement et que chacun de ces circuits peut comprendre une ou plusieurs cavités de circulation d'un flux d'air de refroidissement.

Il est connu de prévoir des promoteurs de turbulence dans au moins une de ces cavités. Ces promoteurs de turbulence sont des éléments en saillie sur une paroi d'une cavité de circulation d'un flux d'air, qui ont pour fonction de générer des perturbations et turbulences dans ce flux d'air afin d'augmenter les échanges thermiques entre ce flux d'air et la paroi de la cavité.

La présente invention propose une nouvelle configuration avantageuse de ces éléments en saillie qui se présentent sous la forme d'arches 50, comme cela est visible à la figure 4. Chaque arche 50 ou élément en saillie comporte deux jambes latérales 52 et un toit médian 54. Les jambes 52 s'étendent entre une première paroi 56 de la cavité 58 et le toit 54, et ce toit 54 s'étend entre les jambes 52 et les relie entre elles.

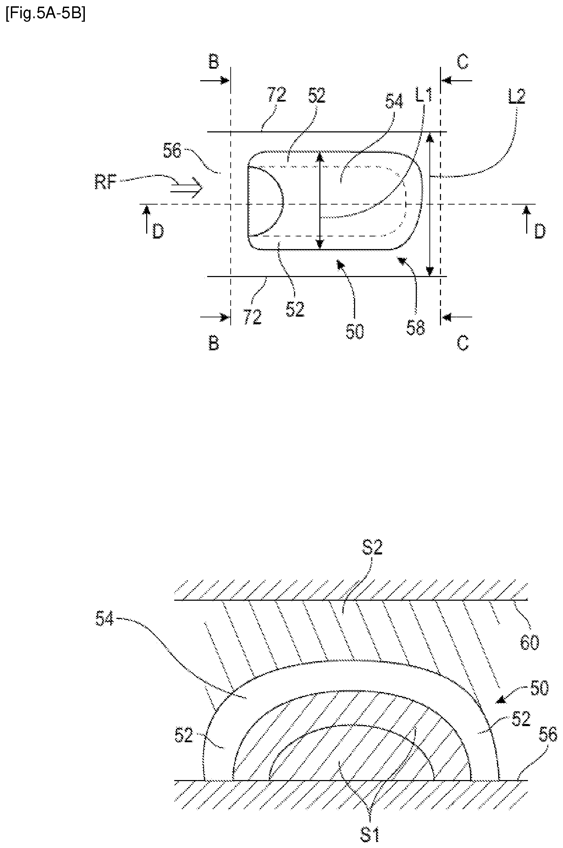

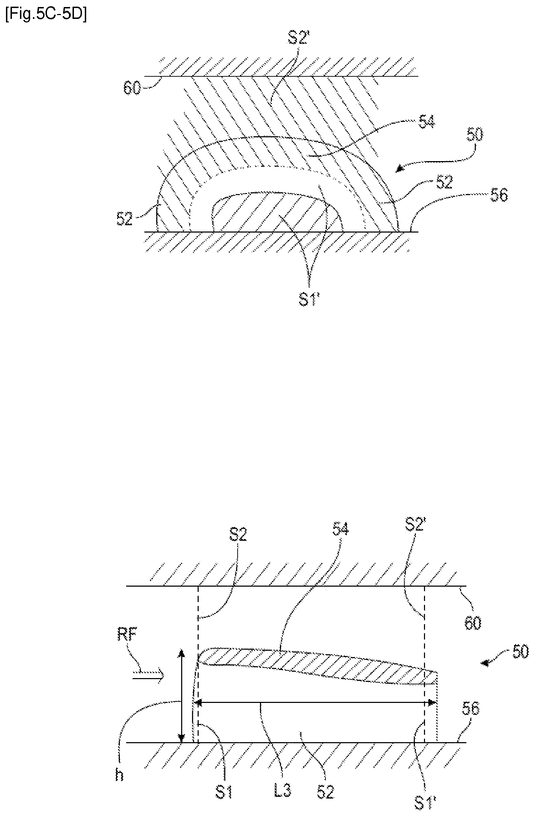

Comme cela est visible aux figures 5A à 5D, chaque arche 50 définit intérieurement, avec la première paroi 56 à laquelle elle est reliée, une première section de passage S1-S1', et extérieurement, avec une seconde paroi 60 opposée à la première paroi 56, une seconde section de passage S2-S2'. La section de passage est notée S1 à l'intérieur et à l'entrée ou l'amont de l'arche 50, S1' à l'intérieur et à la sortie ou à l'aval de l'arche, S2 à l'extérieur et au niveau de l'entrée de l'arche, et S2' à l'extérieur et au niveau de la sortie de l'arche. Chaque arche 50 est configurée pour que la première ou seconde section de passage S1-S1', S2-S2' soit réduite d'amont en aval par rapport à la direction du flux d'air (flèche RF). Autrement dit, chaque arche 50 est configurée de sorte que la section de passage S1' en sortie de l'arche soit inférieure à la section de passage S1 en entrée de l'arche, ou que la section de passage S2' en sortie de l'arche soit inférieure à la section de passage S2 en entrée de l'arche. Chaque section de passage a une forme générale rectangulaire, circulaire, oblongue, trapézoïdale, etc.

La réduction de la section de passage permet d'augmenter la vitesse du flux d'air. Ainsi, lorsque la section de passage est réduite à l'intérieur de l'arche 50 et donc du côté de la première paroi 56, le flux d'air qui s'écoule sur cette première paroi 56 est accéléré, ce qui permet d'augmenter les échanges thermiques entre ce flux d'air et la paroi 56.

Lorsque la section de passage est réduite à l'extérieur de l'arche 50, du côté de la seconde paroi 60, le flux d'air qui s'écoule sur cette seconde paroi est accéléré, ce qui permet d'augmenter les échanges thermiques entre ce flux d'air et la paroi 60.

La réduction de la section de passage peut être obtenue en jouant sur les dimensions de l'arche 50, et en particulier sur les largeurs et/ou hauteurs d'entrée et de sortie de l'arche, la longueur ainsi que sur l'épaisseur des jambes 52 et toit 54 de l'arche 50, etc. La distance entre deux arches 50 consécutives peut permettre également de moduler le niveau d'échanges.

Le toit 54 comporte une première face 54a qui est en regard de la première paroi 56 sur laquelle l'arche 50 ou l'élément est en saillie. Le toit 54 comprend une seconde face 54b qui est en regard de la seconde paroi 60 et opposée à la paroi 54a.

Suivant les besoins de refroidissement et les contraintes de fabrication, l'arche 50 peut donc être positionnée sur la paroi 56 située du côté de l'intrados ou de l'extrados de la pale 21. La paroi 56 est alors refroidie en ajustant la vitesse, et la paroi opposée 60 est également refroidie mais en optimisant sur les tourbillons et donc la turbulence dans le flux d'air RF. Suivant les besoins en refroidissement de la paroi 60, l'intensité des tourbillons générés aux coins supérieurs 70 de l'arche 50 peut par exemple être modulée en ajustant par exemple la pente de l'arche 50 (différence de hauteur entrée/sortie par rapport à sa longueur) ou, d'une façon plus générale, sur la forme de sa génératrice. Dans les figures, l'arche 50 présente en section axiale (figure 5D) une forme de rectangle dont les coins sont rayonnés et dont les dimensions diminuent linéairement pour former un convergent, mais cette section pourrait être en arc de cercle, en ellipse, sinusoïdale ou toute autre forme suivant le type d'écoulement souhaité sur la paroi 60. Les sections en entrée et en sortie S1, S1', S2, S2' peuvent ainsi varier, comme évoqué dans ce qui précède, et la convergence peut être non linéaire, de manière à minimiser les pertes de charge par exemple.

Alternativement, l'arche 50 peut être configurée pour accélérer le flux d'air au niveau de la paroi 60 et non pas de la paroi 56. Dans ce cas, l'arche 50 forme toujours un convergent dans le sens de l'écoulement mais du côté de cette paroi 60.

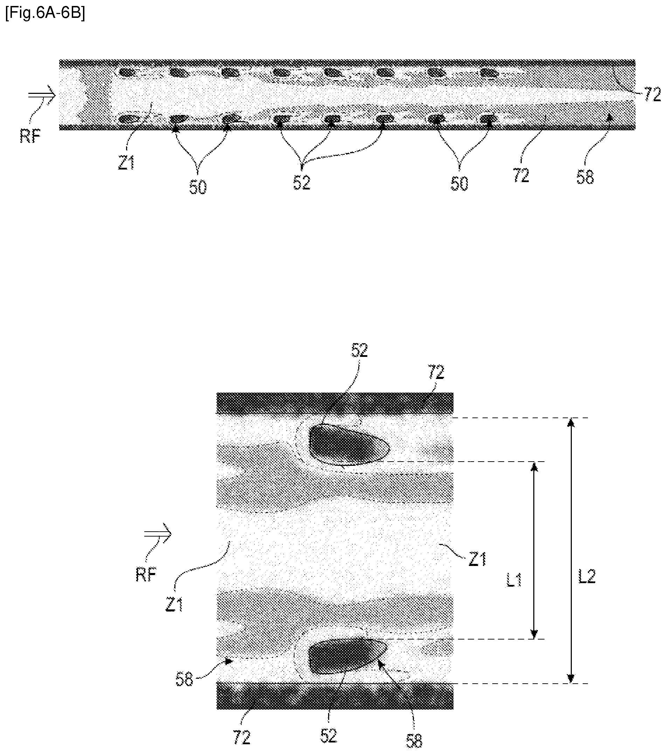

Selon le mode de réalisation de l'invention illustré à la figure 4 et aux figures 6A à 6D, au moins l'une des faces 54a, 54b est inclinée par rapport à la paroi 56, 60 en regard, d'amont en aval par rapport à la direction du flux d'air RF, de façon à réduire la section de passage S1-S1', S2-S2' correspondante.

L'inclinaison de l'une des faces 54a, 54b ou des deux faces du toit 54 peut être obtenue par une inclinaison du toit 54, une variation d'épaisseur du toit, ou une combinaison des deux.

Dans l'exemple représenté, les faces 54a, 54b sont sensiblement parallèles entre elles. La face 54a est inclinée d'amont en aval vers la paroi 56 et réduit donc la première section de passage S1-S1' à l'intérieur de l'arche 50, entre l'entrée et la sortie de l'arche, ce qui entraîne une accélération du flux d'air sur la paroi 56.

Les jambes 52 et le toit 54 de chaque arche 50 comportent des bords amont 62 qui sont arrondis convexes dans l'exemple représenté à la figure 4. Les jambes 52 peuvent également comporter des bords aval 64 qui sont arrondis convexes. Les extrémités des jambes 52, opposées au toit 54, peuvent être raccordées à la paroi 56 par des congés 66. Les jambes 52 sont reliées au toit 54 par les coins 70 qui sont incurvés et dépourvus d'arêtes vives. L'ensemble de ces caractéristiques permet d'améliorer l'aérodynamisme de l'arche 50 de façon à assurer sa fonction d'accélération du flux d'air passant à l'intérieur de l'arche tout en générant le moins possible de perturbations dans ce flux d'air.

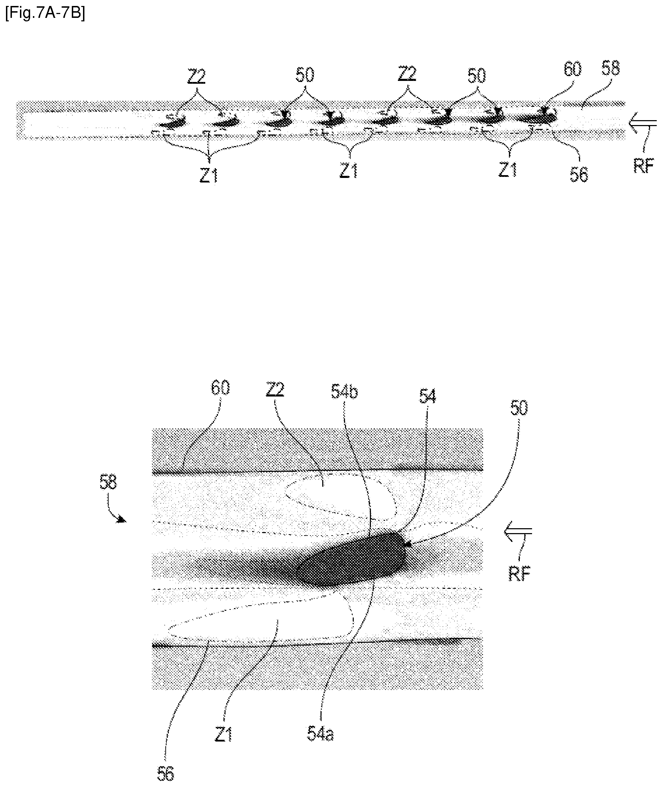

Les arches 50 sont de préférence disposées les unes derrière les autres à l'intérieur de la cavité 58 et forment une rangée d'arches. Chaque rangée comporte par exemple entre 5 et 10 éléments en saillie, comme cela est illustré aux figures 6A et 7A.

Les figures 6A et 6B permettent de constater que les jambes 52 peuvent également être inclinées l'une par rapport à l'autre ainsi que par rapport aux parois latérales 72 de la cavité 58. Les jambes 52 convergent par exemple l'une vers l'autre d'amont en aval de façon à accentuer la réduction de la section de passage.

Les jambes 52 sont situées au voisinage immédiat des parois latérales 68 dans l'exemple représenté. Les jambes 52 sont séparées l'une de l'autre d'une distance minimale L1 représentant au moins 40%, voire 60%, d'une largeur L2 de la cavité 58.

Les figures 7A et 7B permettent de constater l'inclinaison des toits 54 des arches 50 de ce mode de réalisation. Les toits 54 sont situés sensiblement à mi-hauteur dans la cavité 58 dans l'exemple représenté.

Les figures 6A à 7B permettent également de constater les zones Z1 d'accélération du flux d'air à l'intérieur des arches 50 et l'accélération globale du flux d'air dans la cavité 58 (flèche RF). On constate en outre que le niveau d'échanges thermiques d'équilibre est atteint dès la première arche 50. Par ailleurs, le niveau d'échange est bien plus homogène sur la largeur L2 de la cavité 58. Les inventeurs ont constaté qu'avec cette géométrie, le flux de chaleur augmente de 5,1% alors que la perte de charge n'augmente que de 2,7% par rapport aux promoteurs de turbulence classiques. Les arches 50 génèrent des tourbillons Z2 maîtrisés qui refroidissent également la paroi 60 opposée bien plus efficacement que les promoteurs classiques.

La réduction de la section de passage à l'intérieur ou à l'extérieur de l'arche 50, comme évoqué dans ce qui précède, peut être de l'ordre d'au moins 10%. Dans le cas par exemple où c'est la section de passage interne S1-S1' de l'arche 50 qui est réduite, cela signifie que le rapport S1'/S1 est inférieur ou égal à 0,9.

La section de passage à l'intérieur et à l'entrée de l'arche 50 peut représenter au moins 25% de la section de passage totale de la cavité. Autrement dit, le rapport S1/(S1+S2) est au moins égal à 0,25.

L'arche à une longueur notée L3 et son entrée a une hauteur noté h. De préférence, la longueur L3 est comprise entre 0,5.h et 3.h (cf. figure 5D).

Ces différents paramètres peuvent être optimisés en fonction des autres dimensions de la cavité 58 et de l'arche 50 (épaisseur, etc.) afin de contrôler la variation de la section extérieure à l'arche et donc les tourbillons qui peuvent s'y créer. Ainsi, si la paroi 60 opposée à celle de l'arche 50 ne nécessite pas de refroidissement supplémentaire, on cherchera à limiter à moins de 30% l'expansion de section hors arche afin d'y limiter les décollements et donc les pertes de charge. A l'inverse, si le refroidissement de la paroi opposée doit être amélioré, une expansion supérieure hors arche pourra être intéressante, la convergence de section sous arche pourra alors être augmentée (tout en évitant une trop forte accélération conduisant à atteindre Mach 1 par exemple dans la cavité, ce qui engendrerait de fortes pertes de charge).

L'épaisseur des parois de l'arche 50 doit être aussi fine que possible tout en permettant la fabricabilité et en assurant la tenue mécanique de l'aube 20 en fonctionnement. De préférence, la section matière d'entrée de l'arche 50 ne doit pas représenter plus de 40% de la section totale de la cavité.

Avantageusement, mais non limitativement l'aube 20 est réalisée dans un alliage métallique et suivant un procédé de fabrication utilisant la technique de fonderie à cire perdue ou modèle perdu. L'alliage métallique est de préférence à base de Nickel et peut être monocristallin.

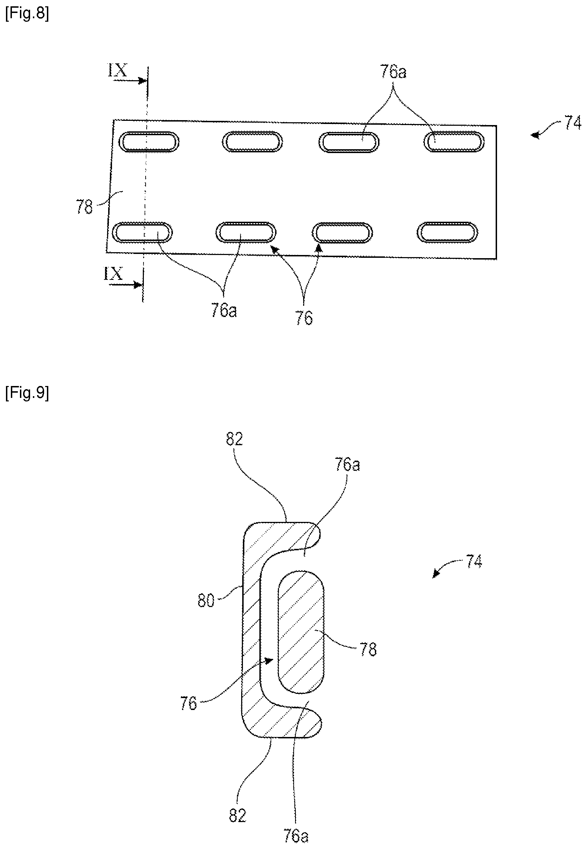

Ce procédé comprend une première étape de fabrication d'un ou de plusieurs noyaux de fonderie. Dans le présent exemple, l'aube comprenant une pale pourvue d'au moins une cavité de circulation d'air de refroidissement est réalisée à partir d'un noyau de fonderie dont un mode de réalisation est représenté aux figures 8 et 9.

Un noyau de fonderie est classiquement obtenu par injection céramique (céramique qui est ensuite déliantée et frittée). Le noyau utilisé dans le cadre de la présente invention n'est toutefois pas réalisable par injection car il n'est pas facilement démoulable.

Ce noyau peut par contre être obtenu par fabrication additive de céramique ou de tout autre matériau adapté comme des métaux réfractaires.

Dans le cas des figures 8 et 9, le noyau 74 céramique a une forme allongée et comporte des conduits internes 76 en U qui sont configurés pour former par moulage les éléments en saillie, c'est-à-dire les arches 50. Chacun de ces conduits 76 comporte deux extrémités 76a qui débouchent sur une même face 78 du noyau configurée pour former par moulage la première paroi 56 précitée. Le noyau 74 comprend une face 80 opposée à la face 78 et configurée pour former par moulage la paroi 60 précitée. Les faces latérales 82 du noyau 74 sont configurées pour former par moulage les parois latérales 72 précitées.

Suivant une autre étape du procédé, de la cire ou un matériau équivalent est injectée autour du noyau 74 voire un ensemble de noyaux, qui sont disposés préalablement, de manière avantageuse, mais non limitativement, dans une presse. Une fois que la cire est refroidie, nous obtenons un modèle comprenant les noyaux noyés dans la cire.

Le modèle est disposé sur une colonne avec d'autres modèles similaires de manière à former une grappe.

Le procédé comprend en outre la réalisation d'une carapace dans un matériau réfractaire autour de la grappe et qui fait office de moule. Le matériau réfractaire est dans le présent exemple une céramique. La carapace est réalisée en immergeant la grappe plusieurs fois dans une barbotine en céramique.

Suivant une autre étape du procédé, du métal en fusion est versé ou coulé à l'intérieur de la carapace de manière à combler les cavités obtenues lors du retrait de la cire dans les modèles et destinés à former les pièces métalliques, ici les aubes de turbine. En effet, préalablement à cette étape de versement de métal, il est réalisé une étape de retrait de la cire.

Lorsque la carapace est refroidie et solidifiée, une étape de décochage permet de détruire la carapace et les noyaux dans les pièces métalliques (aube) de manière à faire apparaître l'aube finale et les cavités de circulation de fluide de refroidissement.

La présente invention procure plusieurs avantages parmi lesquels :
- une amélioration du ratio échange thermique / perte de charge dans la cavité de refroidissement de l'aube,
- une amélioration du ratio volume d'élément en saillie et donc de l'arche (et donc de la masse de l'aube) / surface d'échange,
- un meilleur contrôle de la zone d'amélioration des échanges et une meilleure homogénéité des échanges dans cette zone,
- une réduction potentielle du nombre d'éléments en saillie (et donc de la masse de l'aube) pour refroidir les zones critiques,
- un refroidissement éventuel de la paroi en vis-à-vis si besoin en jouant sur la forme de l'élément en saillie (notamment la pente de la face externe de son toit pour augmenter ou réduire l'intensité des tourbillons libérés aux coins de l'arche),
- etc.

## Revendications

1. Aube (20) pour une turbomachine d'aéronef, cette aube comprenant une pale (21) et un circuit de refroidissement (28) à l'intérieur de la pale, ce circuit de refroidissement (28) comportant au moins une cavité longitudinale (58) d'écoulement d'un flux d'air de refroidissement (RF), le circuit de refroidissement comportant en outre des éléments qui sont en saillie dans ladite cavité et qui sont configurés pour perturber ledit flux d'air, **caractérisée en ce que** chacun desdits éléments en saillie a une forme générale d'arche (50) et comporte deux jambes latérales (52) et un toit médian (54), les jambes (52) s'étendant entre une première paroi (56) de la cavité (58) et ledit toit (54), ce toit (54) reliant entre elles lesdites jambes (52), et **en ce que** chacun desdits éléments définit intérieurement, avec ladite première paroi (56), une première section de passage (S1-S1'), et extérieurement, avec une seconde paroi (60) opposée à la première paroi (56), une seconde section de passage (S2-S2'), et chacun desdits éléments étant configuré pour que ladite première ou seconde section de passage soit réduite d'amont en aval par rapport à la direction dudit flux d'air.

2. Aube (20) selon la revendication 1, **caractérisée en ce que** le toit (54) comporte une première face (54a) qui est en regard de la première paroi (56), et une seconde face (54b) qui est en regard de la seconde paroi (60), au moins l'une des première et seconde faces (54a, 54b) étant inclinée par rapport à la paroi (56, 60) en regard, d'amont en aval par rapport à la direction dudit flux d'air (RF), de façon à réduire la section de passage (S1-S1', S2-S2') correspondante.

3. Aube (20) selon la revendication précédente, **caractérisée en ce que** lesdites première et seconde faces (54a, 54b) sont sensiblement parallèles entre elles.

4. Aube (20) selon l'une des revendications précédentes, **caractérisée en ce que** ledit toit (54) de chacun desdits éléments en saillie est incliné par rapport auxdites première et seconde parois (56, 60).

5. Aube (20) selon l'une quelconque des revendications précédentes, **caractérisée en ce que** lesdits éléments en saillie sont disposés les uns derrière les autres à l'intérieur de ladite cavité (58) et forment une rangée d'éléments en saillie s'étendant le long de ladite direction dudit flux d'air, la rangée comportant par exemple entre 5 et 10 éléments en saillie.

6. Aube (20) selon l'une quelconque des revendications précédentes, **caractérisée en ce que** lesdites jambes (52) de chacun desdits éléments en saillie sont séparées l'une de l'autre d'une distance (L1) représentant plus de 40% d'une largeur (L2) de ladite cavité (58).

7. Aube (20) selon l'une quelconque des revendications précédentes, **caractérisée en ce que** lesdites jambes (52) de chacun desdits éléments en saillie sont orientées de manière convergente d'amont en aval.

8. Aube (20) selon l'une quelconque des revendications précédentes, **caractérisée en ce que** lesdites jambes (52) et ledit toit (54) de chacun desdites éléments en saillie comportent des bords amont (62) qui sont arrondis convexes.

9. Aube (20) selon l'une quelconque des revendications précédentes, **caractérisée en ce que** ledit toit (54) de chacun desdites éléments en saillie est situé sensiblement à une demi hauteur dans ladite cavité (58), cette hauteur étant mesurée entre lesdites première et seconde parois (56, 60).

10. Aube (20) selon l'une quelconque des revendications précédentes, **caractérisée en ce que** chacun desdites éléments en saillie définit une section interne (S1-S1') de passage d'air qui a une forme générale rectangulaire, circulaire, oblongue ou trapézoïdale.

11. Aube (20) selon l'une quelconque des revendications précédentes, **caractérisée en ce que** la réduction de la section de passage depuis l'entrée jusqu'à la sortie de chacun des éléments en saillie, est de l'ordre d'au moins 10%.

12. Aube (20) selon l'une quelconque des revendications précédentes, **caractérisée en ce que** la section de passage à l'intérieur et à l'entrée de chacun des éléments en saillie peut représenter au moins 25% de la section de passage totale de la cavité.

13. Aube (20) selon l'une quelconque des revendications précédentes, **caractérisée en ce que** chacun des éléments en saillie a une longueur notée L3 et a une entrée présentant une hauteur notée h, la longueur L3 étant comprise entre 0,5.h et 3.h.

14. Turbine de turbomachine, comprenant au moins une aube (20) selon l'une quelconque des revendications précédentes.

15. Procédé de fabrication à cire perdue d'une aube (20) selon l'une quelconque des revendications 1 à 13, **caractérisé en ce qu'**il comprend les étapes suivantes :
- fournir un noyau céramique ou métallique réfractaire (74) pour la formation de ladite cavité (58), ce noyau ayant une forme allongée et comportant des conduits internes (76) en U qui sont configurés pour former par moulage lesdits éléments en saillie, chacun de ces conduits (76) comportant chacun deux extrémités (76a) qui débouchent sur une même face (78) du noyau configuré pour former par moulage ladite première paroi (56),
- injection de cire de manière à enrober le noyau (74) et à former un modèle,
- fabrication d'une carapace enveloppant le modèle,
- versement d'un métal en fusion à l'intérieur de la carapace de manière à former l'aube, et
- décochage de la carapace et du noyau (74) de manière à libérer l'aube (20) et à former le circuit de refroidissement (28) avec sa cavité (58) et ses éléments en saillie.

## Patentansprüche

1. Schaufel (20) für ein Turbotriebwerk eines Luftfahrzeugs, wobei diese Schaufel ein Blatt (21) und einen Kühlkreislauf (28) im Inneren des Blattes umfasst, wobei dieser Kühlkreislauf (28) mindestens einen länglichen Hohlraum (58) für die Strömung eines Kühlluftstroms (RF) umfasst, wobei der Kühlkreislauf weiter Elemente umfasst, die in den Hohlraum vorstehen und die konfiguriert sind, um den Luftstrom zu stören, **dadurch gekennzeichnet, dass** jedes der vorstehenden Elemente eine allgemeine Form eines Bogens (50) aufweist und zwei Seitenschenkel (52) und ein Mitteldach (54) umfasst, wobei sich die Schenkel (52) zwischen einer ersten Wand (56) des Hohlraums (58) und dem Dach (54) erstrecken, wobei das Dach (54) die Schenkel (52) miteinander verbindet, und dass jedes der Elemente innen mit der ersten Wand (56) einen ersten Durchgangsquerschnitt (S1-S1'), und außen, mit einer zweiten Wand (60) gegenüber der ersten Wand (56), einen zweiten Durchgangsquerschnitt (S2-S2') definiert, und wobei jedes der Elemente so konfiguriert ist, dass der erste oder zweite Durchgangsquerschnitt von stromaufwärts nach stromabwärts in Bezug auf die Richtung des Luftstroms reduziert wird.

2. Schaufel (20) nach Anspruch 1, **dadurch gekennzeichnet, dass** das Dach (54) eine erste Seite (54a), die der ersten Wand (56) zugewandt ist, und eine zweite Seite (54b), die der zweiten Wand (60) zugewandt ist, umfasst, wobei mindestens eine der ersten und zweiten Seiten (54a, 54b) in Bezug auf die zugewandte Wand (56, 60) von stromaufwärts nach stromabwärts in Bezug auf die Richtung des Luftstroms (RF) geneigt ist, so dass der entsprechende Durchgangsquerschnitt (S1 -S1', S2-S2') reduziert wird.

3. Schaufel (20) nach dem vorstehenden Anspruch, **dadurch gekennzeichnet, dass** die erste und die zweite Seite (54a, 54b) im Wesentlichen parallel zueinander sind.

4. Schaufel (20) nach einem der vorstehenden Ansprüche, **dadurch gekennzeichnet, dass** das Dach (54) jedes der vorstehenden Elemente in Bezug auf die erste und die zweite Wand (56, 60) geneigt ist.

5. Schaufel (20) nach einem der vorstehenden Ansprüche, **dadurch gekennzeichnet, dass** die vorstehenden Elemente innerhalb des Hohlraums (58) hintereinander angeordnet sind und eine Reihe von vorstehenden Elementen bilden, die sich entlang der Richtung des Luftstroms erstrecken, wobei die Reihe zum Beispiel zwischen 5 und 10 vorstehende Elemente umfasst.

6. Schaufel (20) nach einem der vorstehenden Ansprüche, **dadurch gekennzeichnet, dass** die Schenkel (52) jedes der vorstehenden Elemente um einen Abstand (L1) voneinander getrennt sind, der mehr als 40% einer Breite (L2) des Hohlraums (58) darstellt.

7. Schaufel (20) nach einem der vorstehenden Ansprüche, **dadurch gekennzeichnet, dass** die Schenkel (52) jedes der vorstehenden Elemente von stromaufwärts nach stromabwärts konvergierend ausgerichtet sind.

8. Schaufel (20) nach einem der vorstehenden Ansprüche, **dadurch gekennzeichnet, dass** die Schenkel (52) und das Dach (54) jedes der vorstehenden Elemente stromaufwärtige Ränder (62) aufweisen, die konvex abgerundet sind.

9. Schaufel (20) nach einem der vorstehenden Ansprüche, **dadurch gekennzeichnet, dass** das Dach (54) jedes der vorstehenden Elemente im Wesentlichen auf einer halben Höhe in dem Hohlraum (58) angeordnet ist, wobei diese Höhe zwischen der ersten und der zweiten Wand (56, 60) gemessen wird.

10. Schaufel (20) nach einem der vorstehenden Ansprüche, **dadurch gekennzeichnet, dass** jedes der vorstehenden Elemente einen inneren Luftdurchgangsquerschnitt (S1 -S1') bildet, der eine im Allgemeinen rechteckige, kreisförmige, längliche oder trapezförmige Form aufweist.

11. Schaufel (20) nach einem der vorstehenden Ansprüche, **dadurch gekennzeichnet, dass** die Reduktion des Durchgangsquerschnitts vom Eingang bis zum Ausgang jedes der vorstehenden Elemente in der Größenordnung von mindestens 10% liegt.

12. Schaufel (20) nach einem der vorstehenden Ansprüche, **dadurch gekennzeichnet, dass** der Durchgangsquerschnitt im Inneren und am Eingang jedes der vorstehenden Elemente mindestens 25% des gesamten Durchgangsquerschnitts des Hohlraums darstellen kann.

13. Schaufel (20) nach einem der vorstehenden Ansprüche, **dadurch gekennzeichnet, dass** jedes der vorstehenden Elemente eine mit L3 bezeichnete Länge aufweist und einen Einlass mit einer mit h bezeichneten Höhe aufweist, wobei die Länge L3 zwischen 0,5.h und 3.h liegt.

14. Turbotriebwerk, umfassend mindestens eine Schaufel (20) nach einem der vorstehenden Ansprüche.

15. Herstellungsverfahren durch Wachsausschmelzen einer Schaufel (20) nach einem der Ansprüche 1 bis 13, **dadurch gekennzeichnet, dass** es die folgenden Schritte umfasst:
- Bereitstellen eines feuerfesten keramischen oder metallischen Kerns (74) zur Bildung des Hohlraums (58), wobei dieser Kern eine längliche Form aufweist und U-förmige innere Kanäle (76) umfasst, die konfiguriert sind, um die vorstehenden Elemente durch Formen zu bilden, wobei jeder dieser Kanäle (76) jeweils zwei Enden (76a) umfasst, die auf einer gleichen Seite (78) des Kerns münden, der konfiguriert ist, um die erste Wand (56) durch Formen zu bilden,
- Einspritzen von Wachs, um den Kern (74) einzuhüllen und ein Modell zu bilden,
- Herstellen einer Schale, die das Modell umhüllt,
- Gießen einer Metallschmelze in das Innere der Schale, um die Schaufel zu bilden, und
- Entfernen der Schale und des Kerns (74), um die Schaufel (20) freizulegen und den Kühlkreislauf (28) mit seinem Hohlraum (58) und seinen vorstehenden Elementen zu bilden.

## Claims

1. A vane (20) for an aircraft turbomachine, this vane comprising a blade (21) and a cooling circuit (28) inside the blade, this cooling circuit (28) comprising at least one longitudinal cavity (58) for the flow of a cooling air stream (RF), the cooling circuit further comprising projecting elements into said cavity and which are configured to disrupt said air stream, **characterised in that** each of said projecting elements has the general shape of an arch (50) and comprises two lateral legs (52) and a median roof (54), the legs (52) extending between a first wall (56) of the cavity (58) and said roof (54), this roof (54) interconnecting said legs (52), and **in that** each of said elements defines internally, with said first wall (56), a first passage cross-section (S1-S1'), and externally, with a second wall (60) opposite the first wall (56), a second passage cross-section (S2-S2'), and each of said elements being configured so that said first or second passage cross-section is reduced from upstream to downstream with respect to the direction of said air stream.

2. The vane (20) according to claim 1, **characterised in that** the roof (54) comprises a first face (54a) which faces the first wall (56), and a second face (54b) which faces the second wall (60), at least one of the first and second faces (54a, 54b) being inclined relative to the facing wall (56, 60), from upstream to downstream relative to the direction of said air stream (RF), so as to reduce the corresponding passage cross-section (S1-S1', S2-S2').

3. The vane (20) according to the preceding claim, **characterised in that** said first and second faces (54a, 54b) are substantially parallel to each other.

4. The vane (20) according to one of the preceding claims, **characterised in that** said roof (54) of each of said projecting elements is inclined with respect to said first and second walls (56, 60).

5. The vane (20) according to any one of the preceding claims, **characterised in that** said projecting elements are arranged one behind the other inside said cavity (58) and form a row of projecting elements extending along said direction of said air stream, the row comprising for example between 5 and 10 projecting elements.

6. The vane (20) according to any one of the preceding claims, **characterised in that** said legs (52) of each of said projecting elements are separated from each other by a distance (L1) representing more than 40% of a width (L2) of said cavity (58).

7. The vane (20) according to any one of the preceding claims, **characterised in that** said legs (52) of each of said projecting elements are oriented in a convergent manner from upstream to downstream.

8. The vane (20) according to any one of the preceding claims, **characterised in that** said legs (52) and said roof (54) of each of said projecting elements comprise upstream edges (62) which are convexly rounded.

9. The vane (20) according to any one of the preceding claims, **characterised in that** said roof (54) of each of said projecting elements is located substantially at half a height in said cavity (58), this height being measured between said first and second walls (56, 60).

10. The vane (20) according to any one of the preceding claims, **characterised in that** each of said projecting elements defines an internal air passage cross-section (S1-S1') which has a generally rectangular, circular, oblong or trapezoidal shape.

11. The vane (20) according to any one of the preceding claims, **characterised in that** the reduction in the passage cross-section from the inlet to the outlet of each of the projecting elements is of the order of at least 10%.

12. The vane (20) according to any one of the preceding claims, **characterised in that** the passage cross-section inside and at the inlet of each of the projecting elements can represent at least 25% of the total passage cross-section of the cavity.

13. The vane (20) according to any one of the preceding claims, **characterised in that** each of the projecting elements has a length noted L3 and has an inlet with a height noted h, the length L3 being between 0.5.h and 3.h.

14. A turbomachine turbine comprising at least one vane (20) according to any one of the preceding claims.

15. A method for manufacturing lost-wax of a vane (20) according to any one of claims 1 to 13, **characterized in that** it comprises the following steps:
- providing a refractory ceramic or metallic core (74) for forming said cavity (58), this core having an elongate shape and comprising internal U-shaped ducts (76) which are configured to form said projecting elements by moulding, each of said ducts (76) each comprising two ends (76a) which open onto a same face (78) of the core configured to form said first wall (56) by moulding,
- injecting wax so as to coat the core (74) and form a model,
- manufacturing a shell enveloping the model,
- pouring molten metal into the shell to form the vane, and
- stripping the shell and core (74) so as to release the vane (20) and form the cooling circuit (28) with its cavity (58) and projecting elements.
